# EUROPÄISCHE PATENTSCHRIFT

(11) **EP 1 886 038 B1**
(45) Veröffentlichungstag und Bekanntmachung des Hinweises auf die Patenterteilung: **21.10.2009**
(21) Anmeldenummer: 06754038.5
(22) Anmeldetag: 01.06.2006
(51) Int. Cl.: F16C 33/20

(54) **GLEITLAGERSCHALE FÜR MOTORISCHE ANWENDUNGEN**
SLIDING BEARING SHELL FOR ENGINE APPLICATIONS
COQUILLE DE COUSSINET LISSE DESTINEE A DES APPLICATIONS MOTORISEES

(30) Priorität: 02.06.2005 DE 102005026665
(43) Veröffentlichungstag der Anmeldung: 13.02.2008
(73) Patentinhaber: KS Gleitlager GmbH, 68789 St. Leon-Rot (DE)
(72) Erfinder: BICKLE, Wolfgang, 68799 Reilingen (DE); SCHUBERT, Werner, 69168 Wiesloch (DE); HAUPERT, Frank, 67705 Stelzenberg (DE); BUERKLE, Gunter, 71726 Benningen (DE)
(74) Vertreter: Friz, Oliver
(86) Internationale Anmeldenummer: PCT/EP2006/005229
(87) Internationale Veröffentlichungsnummer: WO 2006/128702

(56) Entgegenhaltungen:
- EP-A- 0 984 182
- WO-A-03/103955
- DE-A1- 10 226 264
- GB-A- 2 384 033

## Beschreibung

Die Erfindung betrifft ein Gleitlager für motorische Anwendungen, insbesondere eine Gleitlagerschale zur Lagerung der Kurbelwelle oder der Nockenwelle oder zur Anwendung als Pleuellagerschale, mit einer metallischen Stützschicht und einer darauf aufgebrachten Lagermetallschicht aus Aluminiumlegierung, Kupferlegierung oder Messing.

Es ist bereits bekannt, auf Lagermetallschichten bei Gleitlagern für motorische Anwendungen eine dünne Einlauf-oder Notlaufschicht auf Kunststoffbasis vorzusehen, also eine Beschichtung aus einem matrixbildenden Bindemittel und darin eingelagerten die Gleiteigenschaften verbessernden Festschmierstoffen.

WO 2004/113749 A1 offenbart und lehrt eine Matrix aus modifiziertem Epoxyharz, d. h. eine Mischung aus Epoxyharz und Phenolharz, oder ein Polyimid/amid-Harz mit einem größeren Anteil an Polyimid, wobei die Beschichtung 15 bis 30 Vol.-% eines Metallpulvers, 1 bis 15 Vol.-% eines Fluorpolymers und 0,5 bis 20 Vol.-% eines keramischen Pulvers und 2 bis 15 Vol.-% Silica umfasst. Als Fluorpolymer wird bevorzugt PTFE verwendet.

GB-A-2 384 033 offenbart ebenfalls eine Lagerschale für ein Kreuzkopflager eines Schiffsmotors mit einer etwa 20 µm-dicken Lackschicht. Die Lackschicht umfasst ein synthetisches Harz aus der Gruppe Polyamidimid, Polybenzimidazole, Polyamid, Epoxy- oder Phenolharz. Als Festschmierstoff wird wenigstens ein Bestandteil der Gruppe PTFE, MoS₂, Graphit, Boronnitrid, Polyethersulfon angegeben. Als Hartstoffpartikel ist wenigstens ein Stoff aus der Gruppe der Metalloxide (wie TiO₂, Al₂O₃ und dergleichen), der Carbide (wie WC, MO₂C, SiC und dergleichen), der Nitride (wie Si₃N₄ und dergleichen), genannt. Schließlich ist Metallpulver wie Cu, Ag, Zn und dergleichen genannt. Die meisten Ausführungsbeispiele mit einer Lackschicht auf PAI-Basis enthalten PTFE. Eine einzige PTFE-freie Lackschichtzusammensetzung auf Basis von PAI enthält 40 Vol.-% MoS₂ und 1 Vol.-% TiO₂. Eine weitere PTFE-freie Variante beruht nicht auf PAI-Basis, sondern auf PBI-Basis und enthält 3 Vol.-% SiC und 40 Vol.-% Graphit.

Aus EP-A-0 984 182 ist ein Gleitlager für motorische Anwendungen der eingangs genannten Art bekannt mit einer Lackschicht auf Basis von Polyimid, Polyamidimid, Epoxy oder Phenolharz mit 55 - 90 Gew.-% MoS₂. Es ist des weiteren eine schwer überschaubare Menge weiterer Zusatzstoffe erwähnt, darunter auch Zinksulfid. Ihr Anteil ist 0,5 - 10 Gew.-%, jedoch vorzugsweise nur 1 - 5 Gew.-% und in der Summe höchstens 10 Gew.-%. Die Partikelgröße der Zusatzstoffe liegt bei < 5µm, insbesondere < 2µm.

Der vorliegenden Erfindung liegt die Aufgabe zugrunde, das Einlauf- und das Notlaufverhalten von Gleitlagern für motorische Anwendungen zu verbessern, wobei gerade der Bereich der Mischreibung, wo die Verhältnisse regelmäßig kritisch sind, verbessert werden soll. Unter Mischreibung versteht man einen Zustand, wie er sich beim Anfahren oder gegebenenfalls unter hohen Lasten im Betrieb (zeitweise) einstellen kann, wenn nämlich die Gleitpartner nicht durch einen durchgängigen Schmierfilm (hydrodynamischer Zustand) voneinander getrennt sind. Hier kommt es in besonderem Maße zu Verschleiß, welcher die Lebensdauer des Gleitlagers reduziert. Gerade bei dünnen Einlauf- oder Notlaufschichten stellt sich aber auch das Problem der Anbindung der dünnen Oberflächenbeschichtung an die Lagermetallschicht, was für das Funktionieren des Gleitlagers aber von essentieller Bedeutung ist.

Diese Aufgabe wird bei einem Gleitlager der genannten Art erfindungsgemäß dadurch gelöst, dass auf die Lagermetallschicht eine 8 - 20 µm dicke PTFE-freie Lackschicht auf Basis von PAI (Polyamidimid) aufgebracht ist, die 5 -15 Gew.-% Zinksulfid, 5 - 15 Gew.-% Graphit und 5 - 15 Gew.-% TiO₂ umfasst, und dass das gewichtsprozentuale Verhältnis von Zinksulfid und von Graphit jeweils zu TiO₂ 0,6 - 1,4 beträgt und dass Zinksulfid und TiO₂ in einer Partikelgröße von ≤ 0,7 µm vorliegen.

Es wurde erfindungsgemäß festgestellt, dass das an sich im Hinblick auf seine tribologischen Eigenschaften bewährte PTFE bei Lackschichten auf Basis von PAI (Polyamidimid) gerade bei dünnen Beschichtungen die Anbindung an eine Lagermetallschicht erschwert bzw. dass sich eine PTFE-freie Lackschicht, auch wenn sie sehr dünn ist, erheblich besser auf einer Lagermetallschicht halten lässt, und zwar auch unter starker Belastung. Außerdem hat sich ein Zusatz von Zinksulfid, Graphit und Titandioxid jeweils im beanspruchten Bereich im Zusammenwirken mit PAI als hervorragend geeignet erwiesen. Bei Zinksulfid handelt es sich um einen guten Festschmierstoff, der unempfindlich gegen Trockenheit ist. Das diesbezüglich empfindlichere Graphit hat hingegen eine gute Wärmeleitfähigkeit und ist in der Lage, die auftretende Reibungswärme in Richtung auf die Lagermetallschicht und die metallische Stützschicht abzuleiten. Titandioxid hingegen verleiht die erforderliche Verschleißbeständigkeit. Somit ist mit diesen Komponenten ein tribologisch gesehen auch bei Bedingungen der Mischreibung (hohe Last, auftretende Reibungswärme, Trockenheit) geeignetes System geschaffen.

Es hat sich als vorteilhaft erwiesen, wenn Zinksulfid, Graphit und TiO₂ jeweils zu 7 bis 13 Gew.-% vorliegen. Es erweist sich auch als vorteilhaft, dass das gewichtsprozentuale Verhältnis von Zinksulfid und von Graphit jeweils zu TiO₂ zwischen 0,6 und 1,4, insbesondere zwischen 0,7 und 1,3 beträgt. Im bevorzugten Fall wird vorgeschlagen, etwa dieselben gewichtsprozentualen Mengen von Zinksulfid, Graphit und TiO₂ in der Lackschicht vorzusehen.

Es erweist sich im Hinblick auf eine gute Anbindung an die Lagermetallschicht als vorteilhaft, wenn die Lackschicht fluorpolymerfrei ist.

Es erweist sich des Weiteren als vorteilhaft, dass PAI gut lösbar ist, beispielsweise in NMP (Verhältnis etwa 1:1), und so die Lackschicht als Lösung aufgebracht, insbesondere aufgesprüht werden kann.

Zinksulfid und Titandioxid liegen vorzugsweise als sehr feine Teilchen vor, da sich hierdurch eine sehr "dichte" homogene Verteilung dieser Stoffe in der Matrix aus PAI erreichen lässt. Sie haben vorzugsweise einen D50-Wert der Partikelgröße zwischen 200 nm und 500 nm. Der vorerwähnte D50-Wert der Teilchengröße bezeichnet eine Teilchengröße, bezüglich der 50 Gew.-% des betreffenden Stoffs mit einer demgegenüber größeren Teilchengröße und 50 Gew.-% mit einer demgegenüber kleineren Teilchengröße vorliegen.

Des Weiteren erweist es sich im Hinblick auf die Tragfähigkeit, aber auch im Hinblick auf das Vermögen, Reibungswärme abzuleiten, als vorteilhaft, wenn die Lackschicht einen Zusatz von bis zu 10 Gew.-% Kohlenstofffasern oder Aramidfasern umfasst.

Die Lackschicht hat vorzugsweise eine Dicke von 10 bis 15 µm.

Die vorliegende Erfindung schließt zwar nicht aus, dass neben PAI als matrixbildender Kunststoffkomponente der Lackschicht noch ein oder mehrere weitere matrixbildende Kunststoffe enthalten sein dürfen. Ihr Anteil sollte aber nicht mehr als 20 Gew.-%, insbesondere nicht mehr als 10 Gew.-% des Anteils von PAI in der Lackschicht betragen. Vorzugsweise ist die Matrix zu 100 % von PAI gebildet. Vorteilhafterweise besteht die Lackschicht aus den im Anspruch 1 angegebenen Komponenten und gegebenenfalls den genannten Kohlenstofffasern oder Aramidfasern.

## Patentansprüche

1. Gleitlager für motorische Anwendungen, insbesondere Gleitlagerschale zur Lagerung der Kurbelwelle oder der Nockenwelle oder zur Anwendung als Pleuellagerschale, mit einer metallischen Stützschicht und einer darauf aufgebrachten Lagermetallschicht aus Aluminiumlegierung, Kupferlegierung oder Messing, **dadurch gekennzeichnet, dass** auf die Lagermetallschicht eine 8 - 20 µm dicke PTFE-freie Lackschicht auf Basis von PAI aufgebracht ist, die 5 - 15 Gew.-% Zinksulfid, 5 - 15 Gew.-% Graphit und 5 - 15 Ges.-% TiO₂ umfasst, und dass das gewichtsprozentuale Verhältnis von Zinksulfid und von Graphit jeweils zu TiO₂ 0,6 - 1,4 beträgt und dass Zinksulfid und TiO₂ in einer Partikelgröße von ≤ 0,7 µm vorliegen.

2. Gleitlager nach Anspruch 1, **dadurch gekennzeichnet, dass** Zinksulfid, Graphit und TiO₂ jeweils zu 7-13 Gew.-% vorliegen.

3. Gleitlager nach Anspruch 1 oder 2, **dadurch gekennzeichnet, dass** das gewichtsprozentuale Verhältnis von Zinksulfid und von Graphit jeweils zu TiO₂ 0,7 - 1,3 beträgt.

4. Gleitlager nach Anspruch 1, 2 oder 3, **dadurch gekennzeichnet, dass** die Lackschicht fluorpolymerfrei ist.

5. Gleitlager nach einem der vorstehenden Ansprüche, **dadurch gekennzeichnet, dass** die Lackschicht als Lösung mit gelöstem PAI aufgebracht, insbesondere aufgesprüht ist.

6. Gleitlager nach einem der vorstehenden Ansprüche, **dadurch gekennzeichnet, dass** Zinksulfid und TiO₂ in einer Partikelgröße von ≤ 0,6 µm, insbesondere ≤ 0,5 µm vorliegen.

7. Gleitlager nach einem der vorstehenden Ansprüche, **dadurch gekennzeichnet, dass** der D50-Wert der Partikelgröße von Zinksulfid und TiO₂ zwischen 200 nm und 500 nm liegt.

8. Gleitlager nach einem der vorstehenden Ansprüche, **dadurch gekennzeichnet, dass** die Lackschicht einen Zusatz von bis zu 10 Gew.-% Kohlenstofffasern oder Aramidfasern umfasst.

9. Gleitlager nach einem der vorstehenden Ansprüche, **dadurch gekennzeichnet, dass** die Lackschicht eine Dicke von 10 - 15 µm aufweist.

## Claims

1. Plain bearing for motorised applications, in particular, plain bearing shells to act as bearings for a crankshaft or cam shaft or to use as piston rod shells, with a metallic support layer and a bearing metal layer made from aluminium alloy, copper alloy or brass applied to it, **characterised in that** a PTFE-free varnish coating, 8 - 20 µm thick and based on PAI, is applied to the bearing metal layer, whereby said varnish coating contains 5 - 15 % by weight of zinc sulphide, 5 - 15 % by weight of graphite and 5 - 15 % by weight of TiO₂, and that the percentage ratio by weight of zinc sulphide and of graphite to TiO₂ falls in the range, in each case, of 0.6 - 1.4 and that zinc sulphide and TiO₂ are present with a particle size of ≤ 0.7 µm.

2. Plain bearing in accordance with claim 1, **characterised in that** the zinc sulphide, graphite and TiO₂ are present as a percentage by weight in each case of 7 - 13 %.

3. Plain bearing in accordance with claim 1 or 2, **characterised in that** the percentage ratio by weight of zinc sulphide and of graphite to TiO₂ falls in the range, in each case, of 0.7 - 1.3.

4. Plain bearing in accordance with claim 1, 2 or 3, **characterised in that** the varnish coating contains no fluoropolymers.

5. Plain bearing in accordance with one of the preceding claims, **characterised in that** the varnish coating is applied, in particular sprayed on, with dissolved PAI.

6. Plain bearing in accordance with one of the preceding claims, **characterised in that** zinc sulphide and TiO₂ are present with a particle size of ≤ 0.6 µm, in particular ≤ 0.5 µm.

7. Plain bearing in accordance with one of the preceding claims, **characterised in that** the D50 value of the particle size of zinc sulphide and TiO₂ falls between 200 nm and 500 nm.

8. Plain bearing in accordance with one of the preceding claims, **characterised in that** the varnish coating contains an additive of up to 10 % by weight of carbon fibres or aramid fibres.

9. Plain bearing in accordance with one of the preceding claims, **characterised in that** the varnish coating is between 10 - 15 µm thick.

## Revendications

1. Coussinet lisse destiné à des applications motorisées, notamment coquille de coussinet lisse destinée à supporter le vilebrequin ou l'arbre à cames ou à servir de coussinet de pied de bielle, avec une couche d'appui métallique et, rapportée sur celle-ci, une couche de métal antifriction en alliage d'aluminium, alliage de cuivre ou laiton, **caractérisé en ce qu'**il est appliqué sur la couche de métal antifriction une couche de vernis exempte de PTFE, d'une épaisseur de 8 à 20 µm et à base de PAI, ladite couche de vernis comportant 5 à 15 % en poids de sulfure de zinc, 5 à 15 % en poids de graphite et 5 à 15 % en poids de TiO₂, **en ce que** le ratio entre les pourcentages pondéraux du sulfure de zinc et du graphite respectivement et le pourcentage pondéral du TiO₂ est compris entre 0,6 et 1,4 et **en ce que** la taille des particules de sulfure de zinc et de TiO₂ est inférieure ou égale à 0,7 µm.

2. Coussinet lisse selon la revendication 1, **caractérisé en ce que** le sulfure de zinc, le graphite et le TiO₂ sont respectivement présents à hauteur de 7 à 13 % en poids.

3. Coussinet lisse selon la revendication 1 ou la revendication 2, **caractérisé en ce que** le ratio entre les pourcentages pondéraux du sulfure de zinc et du graphite respectivement et le pourcentage pondéral du TiO₂ est compris entre 0,7 et 1,3.

4. Coussinet lisse selon la revendication 1, 2 ou 3, **caractérisé en ce que** la couche de vernis est exempte de polymère fluoré.

5. Coussinet lisse selon l'une des revendications précédentes, **caractérisé en ce que** la couche de vernis est appliquée, notamment par pulvérisation, sous la forme d'une solution contenant du PAI dissous.

6. Coussinet lisse selon l'une des revendications précédentes, **caractérisé en ce que** la taille des particules de sulfure de zinc et de TiO₂ est inférieure ou égale à 0,6 µm, notamment inférieure ou égale à 0,5 µm.

7. Coussinet lisse selon l'une des revendications précédentes, **caractérisé en ce que** le diamètre médian du sulfure de zinc et du TiO₂ est compris entre 200 nm et 500 nm.

8. Coussinet lisse selon l'une des revendications précédentes, **caractérisé en ce que** la couche de vernis comprend jusqu'à 10 % en poids de fibres de carbone ou de fibres d'aramide.

9. Coussinet lisse selon l'une des revendications précédentes, **caractérisé en ce que** la couche de vernis présente une épaisseur comprise entre 10 et 15 µm.
